# FASCICULE DE BREVET EUROPEEN

(11) **EP 2 266 276 B1**
(45) Date de publication et mention de la délivrance du brevet: **07.11.2018**
(21) Numéro de dépôt: 09721414.2
(22) Date de dépôt: 18.03.2009
(51) Int. Cl.: H04W 12/06, H04W 12/08, H04W 12/02, H04L 29/06, H04L 9/32, H04N 1/44, H04W 88/02

(54) **GESTION D'IDENTITES D'UTILISATEURS DANS UN SYSTEME**
VERWALTUNG VON BENUTZERIDENTITÄTEN IN EINEM SYSTEM
MANAGEMENT OF THE IDENTITIES OF USERS IN A SYSTEM

(30) Priorité: 18.03.2008 FR 0851754
(43) Date de publication de la demande: 29.12.2010
(73) Titulaire: Airbus DS SAS, 78990 Elancourt (FR)
(72) Inventeur: ROUSSEAU, Frédéric, F-78180 Montigny Le Bretonneux (FR); ELOY, Stéphane, F-92400 Courbevoie (FR)
(74) Mandataire: Cabinet Camus Lebkiri
(86) Numéro de dépôt international: PCT/EP2009/053200
(87) Numéro de publication internationale: WO 2009/115552

(56) Documents cités:
- WO-A-02/42935
- WO-A-2005/109818
- WO-A-2007/102702
- GB-A- 2 408 180
- US-A1- 2005 033 994
- US-A1- 2006 183 462
- US-A1- 2006 288 407

## Description

La présente invention se rapporte à la gestion d'une identité d'utilisateur pour un terminal électronique, et plus particulièrement à l'association temporaire d'une identité d'utilisateur à un terminal d'un système.

Certains systèmes offrent des services à des utilisateurs en fonction des identités respectives de ces utilisateurs. Ainsi, lorsqu'un utilisateur souhaite accéder, via un terminal du système, à un service auquel il a par exemple souscrit un abonnement, il associe à ce terminal du système une entité d'identification à partir de laquelle est accessible son identité d'utilisateur. Une telle entité d'identification peut être par exemple un lecteur d'identité ou un support de mémorisation d'identité tel qu'une carte d'identité, ou une carte de paiement ou une carte d'abonnement à un service profilé, par exemple une carte UICC/USIM (pour 'Universal Integrated Circuit Card / Universal Subscriber Identity Module') dans le contexte des réseaux GSM ou 3GPP. Dans l'exemple relatif au réseau GSM utilisant une entité d'identification conforme au standard ISO/IEC 7816, cette dernière et le terminal sont en contact physique puisque, et, bien qu'amovible, cette entité d'identification est en général maintenue à l'intérieur du boitier du terminal. Par conséquent, lorsque le terminal est subtilisé, le voleur peut usurper l'identité de l'abonné puisqu'en subtilisant le terminal il a simultanément récupéré l'entité d'identification utilisée par cet abonné.

On peut alternativement prévoir que l'interface entre le terminal et l'entité d'identification soit une interface électromagnétique, telle qu'une interface radio sans contact. Avec une telle interface, le terminal et l'entité d'identification ne sont pas physiquement connectés. Le niveau de sécurité en est alors amélioré car, lors d'un vol de terminal, l'entité d'identification n'est pas nécessairement volée.

Toutefois, quel que soit le type d'interface utilisée, il convient de noter qu'il est requis que le terminal et l'entité d'identification soient reliés durant toute la période d'utilisation du service de communication considéré.

Il peut en être ainsi, par exemple, pour une transaction financière. Dans ce cas là, si au cours de la transaction financière, l'interface entre l'entité d'identification et le terminal est détectée comme interrompue, toute la transaction doit être réitérée depuis le début.

Ainsi, lorsque l'interface est une interface électromagnétique, il est requis que la distance séparant l'entité d'identification et le terminal soit suffisamment faible afin de dépasser un seuil de qualité minimale de l'interface électromagnétique en deçà duquel la transaction entre la l'entité d'identification et le terminal serait interrompue. Cette distance seuil est dépendante de la norme mise en oeuvre sur cette interface. En effet, on connait par exemple les normes d'interface de proximité ISO/IEC 14443, ISO/IEC 18092 et ISO/IEC 21481 (ISO/IEC pour 'International Organisation for Standardization') qui requièrent que la distance entre l'entité d'identification et le terminal soit de l'ordre de quelques centimètres au plus, alors que d'autres normes, telle que la norme d'interface de voisinage ISO/IEC 15693, tolèrent des distances de l'ordre de plusieurs décimètres.

Ainsi, en utilisant une interface électromagnétique entre l'entité d'identification et le terminal, on peut se prémunir d'une usurpation d'identité mais des coupures de service peuvent se produire sur rupture de l'interface entre le terminal et l'entité d'identification.

Or, dans certains domaines, il peut être désavantageux de subir l'interruption du service dès lors que l'interface entre le terminal et l'entité d'identification est rompue. Tel est notamment le cas pour des communications critiques, mises en oeuvre par exemple par des professionnels de force de sécurité et de secours.

L'état de l'art est connue de par les documents US2006/0288407 A1 et GB2408180 A.

La présente invention vient améliorer la situation.

L'invention est définie dans les revendications indépendantes.

Un premier aspect de la présente invention propose un procédé d'association d'une identité d'utilisateur à un terminal électronique adapté pour offrir un service fondé sur ladite identité d'utilisateur ;
ledit procédé d'association comprenant les étapes suivantes, au niveau du terminal :
/1/ établir une transaction sans contact avec une entité d'identification ;
/2/ recevoir, au cours de ladite transaction, une information relative à une identité d'utilisateur stockée sur ladite entité d'identification ; et
/3/ stocker ladite identité d'utilisateur obtenue à partir de ladite information ;
dans lequel l'identité d'utilisateur est effacée au niveau du terminal lorsque ledit terminal est soumis à une action spécifique.

Ainsi, le terminal est en mesure de récupérer et de stocker, de manière aisée, une identité d'utilisateur depuis une entité d'identification, cette identité d'utilisateur étant stockée de manière temporaire sur le terminal puisqu'elle est effacée quand on soumet le terminal à une certaine action.

Une telle action spécifique peut notamment correspondre à la mise hors tension du terminal ou encore à une action quelconque d'utilisateur sur le terminal, ou bien une action mise en oeuvre par une application embarquée au niveau du terminal, comme par exemple l'occurrence d'un événement interne au terminal (e.g. l'échéance d'une temporisation ou d'un compteur d'échecs).

Grâce à de telles dispositions, il est possible de garantir une continuité dans le service auquel l'utilisateur a accès tout en maintenant un niveau de sécurité élevé contre l'usurpation de l'identité de l'utilisateur. En effet, d'une part, si le terminal est subtilisé à l'utilisateur, l'entité d'identification n'étant pas physiquement liée au terminal, elle n'est pas obligatoirement subtilisée elle aussi. D'autre part, il n'est pas requis que la transaction entre le terminal et l'entité d'identification soit en cours pour que le terminal puisse offrir le service fondé sur l'identité utilisateur puisque cette identité d'utilisateur est stockée au niveau du terminal.

En outre, le stockage de cette identité d'utilisateur est temporaire. Il est à cet effet avantageusement prévu d'effacer cette identité d'utilisateur sous une action appliquée au terminal. Cette action peut être appliquée soit par un utilisateur soit encore par une application embarquée au niveau du terminal.

Une fois que la transaction sans contact entre le terminal et l'entité d'identification est établie, l'identité peut alors être transmise depuis cette entité vers le terminal. A ce moment là, l'identité peut être stockée au niveau du terminal afin de permettre à l'utilisateur d'accéder au service souhaité.

Ainsi, l'interface sans contact entre le terminal et l'entité d'identification permet non seulement d'éviter une usurpation d'identité de l'utilisateur et en outre ne requiert pas que la transaction entre le terminal et l'entité d'identification reste établie tout au long de l'utilisation du service considéré.

Il suffit donc que le terminal et l'entité d'identification puissent communiquer quelques instants seulement pour que le terminal puisse recevoir l'identité d'utilisateur et bénéficier ensuite, sur cette base, d'un service.

Avantageusement, un tel procédé selon un mode de réalisation de la présente invention permet d'obtenir l'identité d'utilisateur rapidement et de manière indépendante d'autres transactions ultérieures effectuées par le terminal.

Il convient de noter que la disparition, le retrait ou l'absence d'entité d'identification peut ne pas impliquer de conséquence sur les communications ou transactions ultérieures du terminal.

Dans ces conditions, la gestion de la protection des opérations, communications ou encore transactions du terminal peut rester indépendante de la gestion de la protection des échanges entre le terminal et l'entité d'identification d'utilisateur.

Une telle caractéristique est un avantage recherché dans le contexte des systèmes de communications critiques professionnels, notamment parce que le vol du terminal en cours d'utilisation n'implique pas le vol de l'entité d'identification, contrairement au cas d'un terminal adapté pour un réseau de communication de type GSM ou 3GPP. En outre, une fois l'identité d'utilisateur obtenue et stockée au niveau du terminal, ce dernier peut effectuer de multiples opérations sans nécessiter une nouvelle transaction avec l'entité d'identification, jusqu'à ce qu'une action spécifique effaçant l'identité d'utilisateur soit mise en oeuvre, la mise hors de tension du terminal, ou bien dans le cas où une procédure de détection de présence de l'entité d'identification (ou 'watch dog') est mise en oeuvre, jusqu'à effacement de l'identité d'utilisateur au niveau du terminal.

En mettant en oeuvre un procédé d'association selon un mode de réalisation de la présente invention, on peut avantageusement supprimer la gestion d'un mot de passe ou code PIN (pour 'Personal Identification Number' en anglais) comme c'est le cas notamment pour débloquer l'usage du clavier d'un terminal adapté pour les réseaux de communications de type GSM ou UMTS.

Avantageusement, la mise en oeuvre d'un procédé d'association selon un mode de réalisation de la présente invention est bien adaptée à une utilisation banalisée de terminal, c'est-à-dire à l'utilisation d'un terminal par différents utilisateurs successifs.

On peut prévoir que l'utilisateur puisse effectuer une manipulation quelconque du terminal permettant d'effacer l'identité d'utilisateur stockée au niveau du terminal avant de cesser de l'utiliser. La mise hors tension du terminal peut permettre notamment cet effacement volontaire de l'identité d'utilisateur stockée.

On peut en outre fournir une fonction spécifique d'effacement dans un menu du terminal, via une application embarquée au niveau du terminal, ou encore commander l'effacement de cette identité d'utilisateur par l'appui sur une ou plusieurs touches du clavier du terminal.

Le terminal n'est pas opérationnel, c'est-à-dire qu'il ne peut pas offrir le service fondé sur une identité, tant qu'il ne possède pas cette identité d'utilisateur. Le terminal peut, avant d'obtenir une identité d'utilisateur, opérer avec une autre identité propre au terminal. Cette identité de terminal peut, par exemple, être un numéro de série du terminal.

Le service offert au niveau du terminal peut être un service local au terminal ou encore un service offert via un réseau de communication. Un service local peut par exemple correspondre à un contrôle de papier d'identité effectué par scannage d'un papier d'identité au niveau du terminal selon un mode de réalisation de la présente invention. L'identité d'utilisateur peut alors être utilisée pour autoriser ou interdire l'utilisation du terminal considéré sur la base d'une liste d'identifiants utilisateur qui est stockée localement au terminal. On peut en outre prévoir que l'entité d'identification stocke, outre l'information relative à l'identité d'utilisateur, un profil d'utilisateur, ou profil d'abonné, qui est transmis au terminal pour adapter le service ou les services offerts par le terminal à l'utilisateur. La présente invention est décrite ici dans son application à une identité d'utilisateur, mais n'est en rien limitée à cette seule identité d'utilisateur. Il est en effet aisé de prévoir de prendre en compte en association à une identité d'utilisateur, d'autres informations, tel que des paramètres individuels comme un numéro d'annuaire, ou un profil d'utilisateur, ou encore un élément de sécurité, comme par exemple une clé d'initialisation ('ignition key' en anglais) ou un certificat de sécurité, ou une combinaison d'entre eux.

Dans un mode de réalisation de la présente invention, l'information relative à l'identité d'utilisateur est l'identité d'utilisateur elle-même. Ainsi, dans ce cas, l'identité d'utilisateur peut être récupérée directement à partir de l'entité d'identification.

Dans un mode de réalisation de la présente invention, on prévoit que le terminal est adapté pour communiquer dans un réseau de communication. On peut alors prévoir qu'une association entre l'information relative à une identité d'utilisateur et l'identité d'utilisateur est gérée au niveau de ce réseau de communication, et que le terminal obtient l'identité d'utilisateur à l'étape /3/, selon les étapes suivantes :
/i/ fournir au réseau de communication l'information relative à une identité d'utilisateur ; et
/ii/ recevoir depuis le réseau de communication ladite identité d'utilisateur.

Ici, l'identité d'utilisateur n'est pas directement stockée sur l'entité d'identification, cette dernière stockant seulement une information à partir de laquelle il est possible d'obtenir cette identité d'utilisateur. Le niveau de sécurité contre une usurpation d'identité d'utilisateur est amélioré.

On peut prévoir que le procédé comprenne en outre les étapes suivantes :
/4/ déterminer si l'entité d'identification est située à proximité du terminal ;
/5/ répéter l'étape /4/ N fois, N étant un nombre entier ;
/6/ décider d'effacer l'identité d'utilisateur au niveau du terminal si on détermine N fois consécutives que l'entité d'identification n'est pas située à proximité du terminal.

La distance entre le terminal et l'entité d'identification requise pour détecter au niveau du terminal la présence de l'entité d'identification est fonction du protocole d'échange de messages utilisé.

Un tel mode de réalisation de la présente invention permet d'augmenter encore le niveau de sécurité de l'identité d'utilisateur, puisque cette identité d'utilisateur est effacée sur le terminal si ce dernier détecte plusieurs fois consécutivement que l'entité d'identification n'est pas présente dans le voisinage. En effet, plusieurs détections de ce type peuvent faire suspecter fortement le fait que l'utilisateur réel du terminal n'est pas celui qu'il prétend être puisqu'il ne semble pas posséder l'entité d'identification correspondante.

Aucune limitation n'est attachée à la présente invention, au regard des messages échangés entre le terminal et l'entité d'identification ou encore entre le terminal et le réseau de communication. Ainsi, notamment, une telle détection de présence d'entité d'identification dans le voisinage d'un terminal peut être mise en oeuvre selon un quelconque protocole.

On peut notamment prévoir que la communication radio entre le terminal et l'entité d'identification visant à fournir au terminal l'information relative à l'identité d'utilisateur est de type NFC (pour 'Near Field Communication' en anglais), comme par exemple les normes d'interfaces de proximité ISO/IEC 14443, ISO/IEC 18092 et ISO/IEC 21481. Dans ce cas, cette communication peut être établie lorsque la distance entre le terminal et l'entité d'identification est comprise entre 4 cm et 10 cm environ. Cette distance étant relativement faible, la protection de l'identité d'utilisateur est améliorée et en outre la consommation d'énergie est avantageusement relativement faible au niveau du terminal.

On peut également envisager que l'interface radio entre le terminal et l'entité d'identification soit d'un autre type qui supporte de plus grandes distances entre le terminal et l'entité d'identification, comme par exemple la norme d'interface de voisinage ISO/IEC 15693.

Dans un mode de réalisation de la présente invention, un terminal peut gérer une interface de voisinage en sus de l'interface de proximité utilisée pour récupérer l'identité selon le procédé décrit supra. Dans ce cas, on peut prévoir que, lorsque le terminal utilise une entité d'identification, une temporisation de validité (watch dog timer) soit déclenchée.

Le procédé d'association temporaire d'une identité d'utilisateur et d'un terminal peut alors comprendre optionnellement les étapes suivantes au niveau du terminal, ces dernières pouvant être réalisées en parallèle d'autres étapes :
- activer périodiquement l'interface de communication de voisinage pendant une certaine période de temps, par exemple sur expiration d'un temporisateur ; et vérifier la présence dans le voisinage de l'identité d'identification utilisée ;
- si la présence de l'entité d'identification est vérifiée, réinitialiser le temporisateur et, de préférence, désactiver l'interface de communication de voisinage, pour économiser la consommation d'énergie ;
- si le temporisateur expire avant qu'une entité d'identification n'ait pu être détectée présente dans le voisinage du terminal ; l'utilisateur du terminal en est averti, par un signal visuel ou sonore). Optionnellement, dans ce cas, l'identité courante de l'utilisateur est effacée du terminal.

Dans un mode de réalisation de la présente invention, un terminal peut à la fois gérer un protocole d'échange de messages de type NFC et un protocole d'un autre type.

On peut prévoir que, lorsque le terminal est adapté pour communiquer dans un réseau de communication, après l'étape /3/, le terminal émet un signal, par exemple un signal sonore. Ainsi, l'utilisateur est informé d'une initialisation correcte du terminal qu'il utilise quant à son identité d'utilisateur.

Après l'étape /3/, le terminal peut ensuite avantageusement s'enregistrer auprès du réseau de communication sur la base de l'identité d'utilisateur. L'utilisateur peut ensuite bénéficier du ou des services offerts dans ce réseau au regard de son identité d'utilisateur.

On peut prévoir que, lorsque le terminal est adapté pour communiquer dans un réseau de communication, avant l'étape /3/, le terminal s'enregistre auprès du réseau de communication sur la base d'une identité du terminal, puis, après l'étape /3/, sur la base de l'identité d'utilisateur.

Dans ce cas, même avant que le terminal n'ait stocké l'identité d'utilisateur, il est en mesure de bénéficier rapidement, du ou des services offerts dans le réseau de communication sans identité d'utilisateur, comme par exemple un accès à un numéro de téléphone d'urgence.

On peut avantageusement prévoir que les étapes /1/ à /3/ soient mises en oeuvre lors d'un mouvement d'utilisateur du terminal consistant à rapprocher le terminal de l'entité d'identification. Ainsi, par exemple, l'utilisateur du terminal peut porter sur lui, comme un badge, l'entité d'identification. Dans ce cas, afin de pouvoir utiliser un terminal selon un mode de réalisation de la présente invention, il peut récupérer son identité d'utilisateur d'un simple geste de la main visant à rapprocher le terminal de son entité d'identification pendant une brève période de temps, qui peut être de quelques secondes.

Un deuxième aspect de la présente invention propose un terminal adapté pour la mise en oeuvre d'un procédé d'association selon le premier aspect.

Un troisième aspect de la présente invention propose un système d'association d'une identité d'utilisateur, comprenant un terminal selon le deuxième aspect de la présente invention et une entité d'identification sur laquelle est stockée une information relative à une identité d'utilisateur.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre une application d'un mode de réalisation de la présente invention ;
- la figure 2 illustre un échange de messages entre un terminal et une entité d'identification selon un mode de réalisation de la présente invention permettant de garantir un certain niveau de sécurité contre l'usurpation d'identité ;
- la figure 3 illustre un échange de messages entre un terminal, une entité d'identification et le réseau relatif à un enregistrement d'un terminal auprès du réseau, selon un mode de réalisation de la présente invention ;
- la figure 4 illustre un échange de messages entre un terminal, une entité d'identification et un réseau relatif à la gestion d'un double enregistrement d'un terminal auprès du réseau, selon un mode de réalisation de la présente invention ;
- la figure 5 illustre un échange de messages entre un terminal, une entité d'identification et un réseau selon un mode de réalisation de la présente invention au cours duquel l'identité d'utilisateur est obtenue à partir du réseau, et
- la figure 6 illustre un système d'association d'une identité d'utilisateur selon un mode de réalisation de la présente invention.

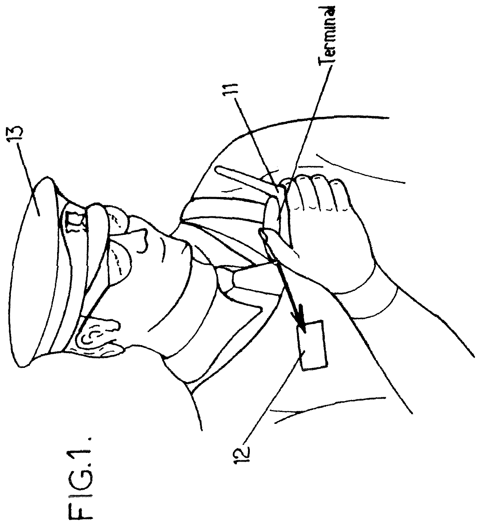

La figure 1 illustre une application d'un mode de réalisation de la présente invention. Un utilisateur 13 dispose d'un terminal 11 et d'une entité d'identification 12 selon un mode de réalisation de la présente invention. On peut ici prévoir que l'entité d'identification 12 est portée par l'utilisateur au niveau de la poitrine et qu'au moment de l'initialisation de son terminal 11, l'utilisateur approche ce terminal 11 de l'endroit où il porte cette entité d'identification 12. Ainsi, la transaction entre l'entité d'identification 12 et le terminal peut s'établir selon un mode de réalisation de la présente invention afin que le terminal puisse disposer par la suite de l'identité d'utilisateur de l'utilisateur 13 sur la base de laquelle il peut disposer d'un service offert. La transaction permettant au terminal de récupérer l'identité peut être mise en oeuvre en effectuant un mouvement de rapprochement du terminal vers l'entité d'identification. On peut prévoir que le terminal émette un signal tel qu'un signal sonore dès que l'identité est récupérée. Ainsi, suite à l'émission de ce signal, le terminal peut alors être éloigné de l'entité d'identification.

Il convient de prévoir que le terminal ne dispose que temporairement d'une identité d'utilisateur afin d'anticiper un vol potentiel.

A cet effet, on prévoit d'effacer l'identité d'utilisateur en mettant en oeuvre une action spécifique sur le terminal, comme par exemple la mise hors tension du terminal. Ainsi, le terminal ne dispose au mieux que temporairement de l'identité d'utilisateur.

Dans un mode de réalisation de la présente invention, afin d'augmenter la protection contre une usurpation potentielle d'identité de l'utilisateur, on peut avantageusement prévoir de mettre en place un contrôle de temps en temps de la présence de l'entité d'identification dans le voisinage du terminal qui a stocké l'identité correspondante, par selon une interface sans contact de voisinage complémentaire de l'interface sans contact de proximité utilisée pour la précédente transaction.

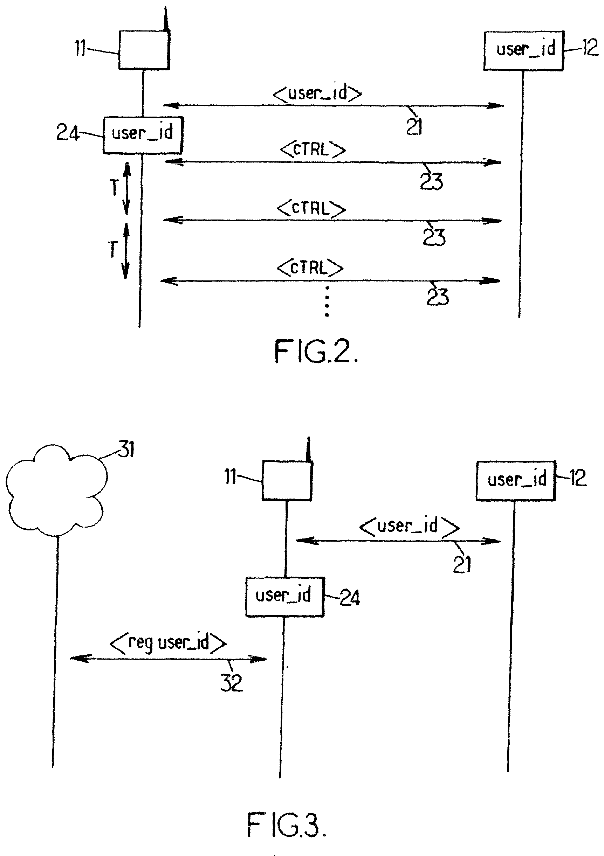

La figure 2 illustre un échange de messages entre un terminal et une entité d'identification selon un mode de réalisation de la présente invention permettant d'augmenter le niveau de sécurité contre l'usurpation d'identité.

Ici, un échange de messages d'identification 21 <user-id> correspond à la transaction entre le terminal 11 et l'entité d'identification 12 au cours de laquelle l'identité d'utilisateur user-id est récupérée par le terminal. Cet échange de messages peut être un échange de messages sécurisé pour augmenter la protection contre une éventuelle usurpation de l'identité d'utilisateur.

Une fois l'identité ainsi récupérée au niveau du terminal, elle y est stockée à une étape 24. Afin de garantir une sécurité contre l'usurpation d'identité, on peut avantageusement prévoir la mise en oeuvre d'une protection par un mécanisme de chien de garde ('watch dog' en anglais) entre le terminal 11 et l'entité d'identification 12 de sorte à vérifier que, de temps en temps au moins, le terminal 11 est à proximité de l'entité d'identification 12 à partir de laquelle il a récupéré l'identité d'utilisateur qu'il a stockée. Ainsi, une fois que la transaction a été établie entre le terminal et l'entité d'identification, et que le terminal 11 a stocké l'identité qui lui permet de disposer du service considéré, le terminal vérifie de temps en temps la présence à proximité de l'entité d'identification 12.

Un tel 'watch dog' peut se composer d'une succession d'échanges de messages de contrôle de présence 23 <CTRL>, chacun de ces échanges de messages visant à déterminer la présence ou non de l'entité d'identification 12 à proximité du terminal 11. Deux échanges de messages 23 successifs peuvent par exemple être séparés d'une période de temps T.

On peut alors avantageusement prévoir que si un nombre N d'exécutions successives d'échanges de messages 23 permet au terminal de déterminer que l'entité d'identification 12 n'est pas à proximité du terminal 11, le terminal efface l'identité stockée. En effet, dans ces conditions, on peut suspecter une usurpation d'identité puisqu'on suppose que l'utilisateur de cette identité dispose, à proximité du terminal qu'il utilise, de son entité d'identification et que, de ce fait, il peut de temps en temps au moins en détecter la présence.

On peut en outre prévoir que l'utilisateur est informé de ce contrôle de présence négatif, et de l'effacement de l'identité d'utilisateur au niveau du terminal par un signal, par exemple un signal lumineux ou sonore produit au niveau de ce terminal.

Les valeurs de T et de N peuvent avantageusement être déterminées en fonction de l'application d'un mode de réalisation de la présente invention.

Le terminal est adapté pour mettre en oeuvre l'échange de messages 23 visant à détecter la présence de l'entité d'identification 12 dans son voisinage. Aucune limitation n'est attachée à la présente invention au regard de cet échange de messages.

Dans de telles conditions, même si la transaction entre le terminal et l'entité d'identification est interrompue, le terminal dispose encore de l'identité de l'utilisateur. Toutefois, comme l'absence de l'entité d'identification 12 est détectée pendant un certain temps au niveau du terminal 11, par mesure de sécurité contre l'usurpation d'identité, cette identité d'utilisateur est effacée sur le terminal 11.

Par conséquent, ce mode de réalisation permet de garantir une continuité de service au niveau du terminal, même si le terminal 11 est parfois éloigné de l'entité d'identification 12, tout en garantissant un niveau élevé de sécurité contre le vol d'identité d'utilisateur.

Dans une modalité, la vérification de présence de l'entité d'identification par le terminal est effectuée par une interface électromagnétique sans contact de voisinage au lieu d'être effectuée par l'interface sans contact de proximité utilisée pour transférer l'identité.

Dans un mode de réalisation de la présente invention, le terminal est adapté pour communiquer dans un réseau de communication 31, et l'identité d'utilisateur est destinée à être utilisée dans ce réseau de communication 31 afin d'accéder au niveau du terminal 11 à un ou plusieurs services de communication.

La figure 3 illustre un échange de messages entre le terminal 11, l'entité d'identification 12 et le réseau 31 relatif à un enregistrement d'un terminal auprès du réseau de communication dans lequel il peut communiquer, selon un mode de réalisation de la présente invention.

En premier lieu, le terminal 11 récupère l'identité d'utilisateur user-id de son utilisateur auprès de l'entité d'identification 12 au cours de l'échange de messages d'identification 21 <user-id> et le stocke localement à l'étape 24.

Le terminal 11 est ensuite en mesure de s'enregistrer sur la base de cette identité user-id en mettant en oeuvre un échange de messages d'enregistrement d'utilisateur 32 <reg user-id> avec le réseau de communication 31.

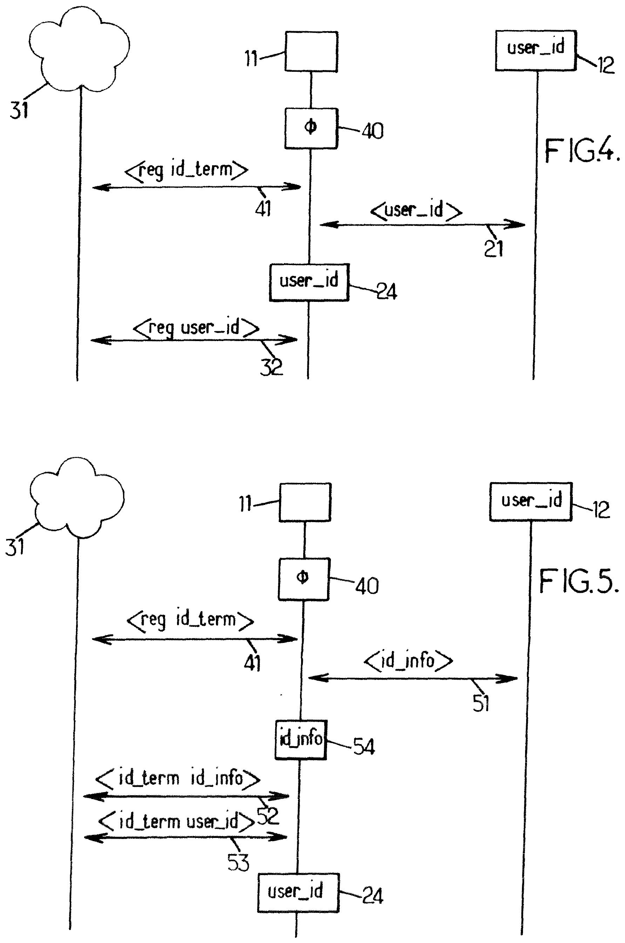

La figure 4 illustre un échange de messages, entre le terminal, l'entité d'identification et le réseau, relatif à la gestion d'un double enregistrement d'un terminal auprès du réseau, selon un mode de réalisation de la présente invention. Cet échange peut être mis en oeuvre lorsque le terminal 11 a une identité qui lui est propre, id-term.

Dans un mode de réalisation de la présente invention, à la mise sous tension du terminal 11, ce dernier ne dispose d'aucune identité d'utilisateur, comme illustré à une étape 40. Ainsi, avant que l'échange de messages d'identification 21 ne soit mis en oeuvre, au moment de l'initialisation du terminal, ce dernier peut s'enregistrer avec son propre identifiant id-term selon un échange de messages d'enregistrement de terminal 41 <reg id-term>.

Puis, une fois que l'identité d'utilisateur est récupérée, en étape 24, par l'échange de messages d'identification 21, le terminal peut alors procéder à un enregistrement auprès du réseau fondé sur l'identité d'utilisateur via un échange de messages d'enregistrement d'utilisateur 32.

Ce mode de réalisation permet avantageusement d'augmenter l'efficacité du procédé d'enregistrement d'un terminal à un réseau qui requiert à la fois une identité du terminal et une identité de l'utilisateur en permettant de procéder en premier lieu à l'enregistrement du terminal avant que la procédure de récupération de l'identité d'utilisateur n'ait été effectuée.

Il peut également être particulièrement avantageux lorsque le réseau considéré 31 offre en outre des services basés sur l'enregistrement du terminal seulement. En effet, l'utilisateur peut alors utiliser ces services en attendant de disposer de l'identité d'utilisateur user-id et de mettre en oeuvre l'enregistrement de l'utilisateur 32.

Dans une variante du mode de réalisation de la présente invention décrit en référence à la figure 4, on peut prévoir de fournir au réseau 31, de manière associée, à la fois l'identité propre au terminal id-term et l'identité d'utilisateur user-id au cours d'un même échange de messages, l'échange de message d'enregistrement 32.

La figure 5 illustre un échange de messages entre le terminal 11, l'entité d'identification 12 et le réseau 32 selon un mode de réalisation de la présente invention au cours duquel l'identité d'utilisateur est finalement obtenue à partir du réseau.

Dans ce mode de réalisation, à l'initialisation du terminal 11, ce dernier ne détient aucune identité d'utilisateur stockée localement, comme illustré à l'étape 40. En premier lieu, dans sa phase d'initialisation, le terminal 11 met en oeuvre un enregistrement de terminal auprès du réseau de communication 31 sur la base des échanges de messages 41 <reg id-term>, fournissant ainsi au réseau 31 son identifiant propre id-term.

Ensuite, il met en oeuvre en oeuvre l'étape consistant à récupérer une identité d'utilisateur user-id. Dans ce mode de réalisation de la présente invention, l'identité d'utilisateur elle-même n'est pas directement stockée au niveau de l'entité d'identification 12 que détient l'utilisateur du terminal 11. L'entité d'identification 12 stocke ici seulement une information id-info permettant de récupérer par la suite l'identité d'utilisateur auprès du réseau 31.

Ainsi, l'étape consistant à récupérer l'identité d'utilisateur au niveau du terminal se décompose en deux parties au niveau du terminal, une première partie consistant à récupérer l'information d'utilisateur id-info auprès de l'entité d'identification 12, et une seconde partie consistant à récupérer l'identité d'utilisateur user-id auprès du réseau 31 sur la base de l'information d'utilisateur id-info. Dans ce cas, on peut prévoir que le réseau 31 comprend un serveur d'annuaire qui est adapté pour gérer une association entre une information d'utilisateur et une identité d'utilisateur.

Le terminal met en oeuvre en premier lieu la première partie selon un échange de messages 51 avec l'entité d'identification 12 au cours duquel il récupère l'information d'utilisateur qui est stockée sur cette entité d'identification 12.

Dans un mode réalisation particulier, on peut prévoir que le terminal stocke l'information d'utilisateur id-info, comme illustré à une étape 54 de la figure 5.

Puis, il procède alors à la récupération de l'identité d'utilisateur en lui-même auprès du réseau 31 sur la base de l'information d'utilisateur via un échange de messages d'identification avec le réseau au cours duquel il fournit l'information d'utilisateur dans un message 52 et reçoit en échange l'identité d'utilisateur user-id associée dans un message 53.

Le message 52 peut en outre indiquer l'identité de terminal id-term, pour ne permettre qu'à un terminal préalablement enregistré de pouvoir obtenir une identité d'utilisateur.

Sur réception du message 53 indiquant l'identité d'utilisateur user-id, le terminal 11 la stocke à l'étape 24.

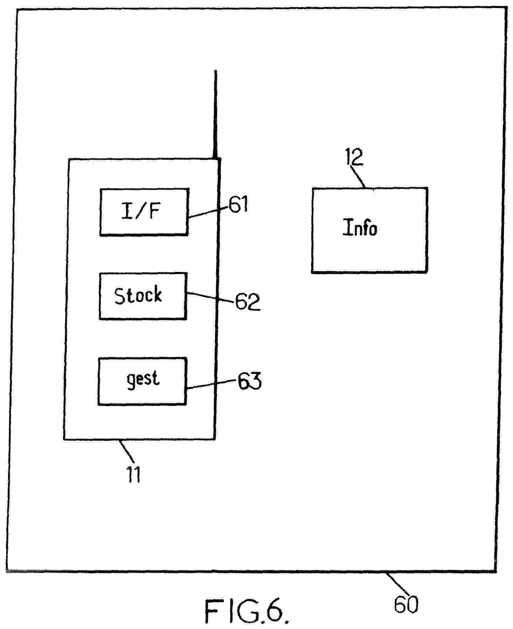

La figure 6 illustre un système d'association d'une identité d'utilisateur selon un mode de réalisation de la présente invention.

Un tel système d'association 60 comprend une entité d'identification 12 stockant une information relative à une identité d'utilisateur et un terminal 11 selon un mode de réalisation de la présente invention. Ce dernier comprend :
- une unité d'interface radio 61 adaptée pour établir une transaction 21 avec une entité d'identification 12 et pour recevoir une information relative à une identité d'utilisateur stockée sur ladite entité d'identification, au cours de ladite transaction ;
- une unité de stockage 62 adaptée pour stocker ladite identité d'utilisateur obtenue à partir de ladite information relative à une identité d'utilisateur ; et
- une unité de gestion de stockage 63 adaptée pour effacer l'identité d'utilisateur lorsque le terminal est soumis à une action spécifique.

Lorsque le terminal est adapté pour communiquer dans le réseau de communication 31, l'unité d'interface radio 61 peut en outre être adaptée pour fournir au réseau de communication 31, via le message 52, l'information d'utilisateur et pour recevoir depuis le réseau de communication 31, via le message 53, l'identité d'utilisateur.

L'unité d'interface radio 61 peut en outre être adaptée pour déterminer si l'entité d'identification 12 est située à proximité du terminal et l'unité de gestion de stockage 63 peut en outre être adaptée pour décider d'effacer l'identité d'utilisateur quand l'unité d'interface radio détermine N fois consécutives que l'entité d'identification n'est pas située à proximité du terminal, N étant un nombre entier quelconque.

Le terminal selon un mode de réalisation de la présente invention est en charge de fournir l'énergie à l'entité d'identification sans contact. Le terminal peut être par exemple un équipement d'extrémité d'un système de communication, tel qu'un système de radiocommunications professionnelles mobiles ou PMR (pour 'Professional Mobile Radio' en anglais).

L'entité d'identification 12 peut correspondre à une carte à puce sans contact de proximité. Elle peut être par exemple une carte professionnelle portée par l'utilisateur sur sa poitrine ou dans son portefeuille, ou bien une carte d'identité, un permis de conduire ou un document de voyage.

On peut prévoir que l'interface radio entre le terminal 11 et l'entité d'identification 12 soit désactivée dès que l'identité d'utilisateur est stockée au niveau du terminal, excepté lorsqu'une procédure de contrôle de présence d'entité d'identification est mise en oeuvre telle qu'illustrée à la figure 2.

En effet, dans ce cas, il peut être prévu que le terminal active alors périodiquement et temporairement son interface radio seulement pendant une période déterminée lui permettant de mettre en oeuvre un contrôle de présence de l'entité d'identification dans le voisinage. En procédant ainsi, on est en mesure d'économiser de l'énergie au niveau du terminal.

## Revendications

1. Procédé d'association d'une identité d'utilisateur, user_id, à un terminal électronique mobile (11) comportant une identité du terminal id-term, et adapté pour offrir un service fondé sur ladite identité d'utilisateur, user-id ; ledit procédé d'association comprenant les étapes suivantes, au niveau du terminal électronique mobile :
▪ /1/ établissement d'une transaction entre le terminal et une entité d'identification (12) via une interface sans contact (21), ledit terminal étant adapté à détecter la présence de ladite entité d'identification (12) dans son voisinage, ladite entité d'identification stockant une information relative à l'identité d'utilisateur, user-id;
▪ /2/ réception au cours de ladite transaction, de l'information relative à l'identité d'utilisateur, user-id, stockée sur ladite entité d'identification et obtention de l'identité d'utilisateur, user-id, à partir de ladite information ;
▪ /3/ stockage temporaire de l'identité d'utilisateur, user-id, obtenue, le procédé d'association étant en outre **caractérisé en ce que** ladite identité utilisateur est effacée du terminal lorsque le terminal est soumis à une action spécifique et **en ce que** le terminal communique dans un réseau de communication (31) et **en ce que**, avant l'étape /3/, le terminal s'enregistre auprès du réseau de communication (31) sur la base de l'identité du terminal, id-term, puis, après l'étape /3/, sur la base de l'identité de l'utilisateur, user-id.

2. Procédé d'association d'une identité d'utilisateur, user-id, selon l'une quelconque des revendications précédentes, comprenant en outre les étapes suivantes au niveau du terminal (11) :
▪ /4/ déterminer si l'entité d'identification (12) est située à proximité du terminal ;
▪ /5/ répéter l'étape /4/ N fois, N étant un nombre entier ; et
▪ /6/ décider d'effacer l'identité d'utilisateur, user-id, au niveau du terminal si on détermine N fois consécutives que l'entité d'identification n'est pas située à proximité du terminal.

3. Procédé d'association d'une identité d'utilisateur, user-id, selon l'une quelconque des revendications précédentes, dans lequel, après l'étape /3/, le terminal émet un signal sonore ou lumineux.

4. Procédé d'association d'une identité d'utilisateur, user-id, selon l'une quelconque des revendications précédentes, dans lequel le terminal Z communique dans un réseau de communication (31) ; et dans lequel, avant l'étape /3/,
▪ réception au cours de ladite transaction d'une information relative à une identité d'utilisateur stockée sur ladite entité d'identification ;
▪ transmission par le terminal au réseau de communication (31) l'information relative à l'identité d'utilisateur ;
▪ réception depuis le réseau de communication d'une identité de l'utilisateur associée à l'information relative à l'identité de l'utilisateur,
▪ stockage temporaire par le terminal de l'identité d'utilisateur reçue, ladite identité utilisateur étant effacée du terminal, lorsque ledit terminal est soumis à une action spécifique.

5. Procédé d'association d'une identité d'utilisateur, user-id, selon l'une quelconque des revendications précédentes, dans lequel le terminal communique dans un réseau de communication (31) ; et dans lequel, après l'étape /3/, le terminal s'enregistre auprès du réseau de communication (31) sur la base de l'identité d'utilisateur, user-id.

6. Procédé d'association d'une identité d'utilisateur selon l'une quelconque des revendications précédentes, dans lequel les étapes /1/ à /3/ sont mises en oeuvre lors d'un mouvement d'utilisateur du terminal consistant à rapprocher ledit terminal de l'entité d'identification.

7. Terminal électronique mobile (11) comportant une identité du terminal (id-term) et adapté pour offrir un service fondé sur une identité d'utilisateur (user-id), ledit terminal étant adapté à détecter la présence d'une entité d'identification (12) dans son voisinage, ladite entité d'identification (12) stockant une information relative à l'identité d'utilisateur, user-id; ledit terminal comprenant :
▪ des moyens (41) pour s'enregistrer auprès d'un réseau de communication (31) sur la base de l'identité du terminal, id-term;
▪ une unité d'interface radio (61) adaptée pour établir une transaction (21) sans contact avec une entité d'identification (12) et pour recevoir l'information relative à l'identité d'utilisateur, user-id, stockée sur ladite entité d'identification, au cours de ladite transaction ;
▪ une unité de stockage (62) adaptée pour stocker ladite identité d'utilisateur, user-id, obtenue à partir de ladite information ;
▪ des moyens (32, 52, 53) pour s'enregistrer auprès du réseau de communication (31) sur la base de l'identité d'utilisateur, user-id, après le stockage de ladite identité d'utilisateur, user-id, et et sur la base de l'identité du terminal avant le stockage de ladite identité d'utilisateur, user-id ;
▪ une unité de gestion de stockage (63) adaptée pour effacer l'identité d'utilisateur, user-id, lorsque le terminal est soumis à une action spécifique.

8. Terminal selon la revendication précédente dans lequel ledit terminal étant adapté pour communiquer dans un réseau de communication (31), ledit terminal comprenant :
▪ des moyens pour fournir (52) au réseau de communication (31) une information relative à l'identité d'utilisateur fournie par l'unité d'identification ;
▪ des moyens pour recevoir (53) depuis le réseau de communication ladite identité d'utilisateur, une association entre l'information relative à une identité d'utilisateur et l'identification d'utilisateur étant gérée au niveau du réseau de communication (31).

9. Terminal (11) selon les revendications 7 et 8, étant en outre adapté pour communiquer dans un réseau de communication (31), dans lequel l'unité d'interface radio (61) est en outre adaptée pour fournir (52) au réseau de communication (31) l'information d'utilisateur et pour recevoir (53) depuis le réseau de communication ladite identité d'utilisateur.

10. Terminal (11) selon l'une des revendications 7 à 9, dans lequel l'unité d'interface radio est en outre adaptée pour déterminer si l'entité d'identification (12) est située à proximité du terminal ; et
dans lequel l'unité de gestion de stockage (63) est en outre adaptée pour décider d'effacer l'identité d'utilisateur quand l'unité d'interface radio détermine N fois consécutives que l'entité d'identification n'est pas située à proximité du terminal, N étant un nombre entier quelconque.

11. Système d'association (60) d'une identité d'utilisateur, comprenant un terminal (11) selon l'une quelconque des revendications 7 à 10 et une entité d'identification (12) sur laquelle est stockée une information relative à une identité d'utilisateur, ledit système comprenant des moyens pour exécuter le procédé selon l'une des revendications 1 à 6.

## Patentansprüche

1. Verfahren zur Verbindung einer Nutzeridentität, user_id, mit einem mobilen elektronischen Terminal (11), umfassend eine Identität des Terminals, id-term, und geeignet, um einen Dienst zu bieten, der auf der genannten Nutzeridentität, user-id, gründet;
wobei das genannte Verfahren zur Verbindung die folgenden Schritte in Bezug auf das mobile elektronische Terminal umfasst:
▪ /1/ Herstellen einer Transaktion zwischen dem Terminal und einer Identifizierungseinheit (12) über eine Schnittstelle ohne Kontakt (21), wobei das genannte Terminal geeignet ist, das Vorhandensein der genannten Identifizierungseinheit (12) in ihrer Nähe zu detektieren, wobei die genannte Identifizierungseinheit eine Information bezüglich der Nutzeridentität, user-id, speichert;
▪ /2/ im Verlauf der genannten Transaktion Empfang der Information bezüglich der Nutzeridentität, user-id, die in der genannten Identifizierungseinheit gespeichert ist, und Erhalt der Nutzeridentität, user-id, ausgehend von der genannten Information;
▪ /3/ vorübergehende Speicherung der erhaltenen Nutzeridentität, user-id,
wobei das Verfahren zur Verbindung darüber hinaus **dadurch gekennzeichnet ist, dass** die genannte Nutzeridentität vom Terminal gelöscht wird, wenn das Terminal einer spezifischen Aktion unterzogen wird und dass das Terminal in einem Kommunikationsnetzwerk (31) kommuniziert und dass vor Schritt /3/ das Terminal sich in dem Kommunikationsnetzwerk (31) basierend auf der Identität des Terminals, id-term, und dann nach Schritt /3/ basierend auf der Identität des Nutzers, user-id, anmeldet.

2. Verfahren zur Verbindung einer Nutzeridentität, user-id, gemäß irgendeinem der voranstehenden Ansprüche, umfassend darüber hinaus die folgenden Schritte im Hinblick auf das Terminal (11):
▪ /4/ Bestimmung, ob die Identifizierungseinheit (12) in der Nähe des Terminals angeordnet ist;
▪ /5/ Wiederholung des Schritts /4/ N-mal, wobei N eine ganze Zahl ist; und
▪ /6/ Entscheidung zum Löschen der Nutzeridentität, user-id, in Bezug auf das Terminal, wenn N-mal aufeinander folgend bestimmt wird, dass die Identifizierungseinheit nicht in der Nähe des Terminals angeordnet ist.

3. Verfahren zur Verbindung einer Nutzeridentität, user-id, gemäß irgendeinem der voranstehenden Ansprüche, bei dem nach Schritt /3/ das Terminal ein Ton- oder Leuchtsignal ausgibt.

4. Verfahren zur Verbindung einer Nutzeridentität, user-id, gemäß irgendeinem der voranstehenden Ansprüche, bei dem das Terminal in einem Kommunikationsnetzwerk (31) kommuniziert; und in dem vor Schritt /3/,
▪ im Verlauf der genannten Transaktion eine Information bezüglich einer in der genannten Identifizierungseinheit gespeicherten Nutzeridentität gespeichert wird;
▪ die Information bezüglich der Nutzeridentität durch das Terminal auf das Kommunikationsnetzwerk (31) übertragen wird;
▪ von dem Kommunikationsnetzwerk eine Nutzeridentität, die mit der Information bezüglich der Identität des Nutzers verbunden ist, empfangen wird,
▪ durch das Terminal die empfangene Nutzeridentität vorübergehend gespeichert wird, wobei die genannte Identität vom Terminal gelöscht wird, wenn das genannte Terminal einer spezifischen Aktion unterzogen wird.

5. Verfahren zur Verbindung einer Nutzeridentität, user-id, gemäß irgendeinem der voranstehenden Ansprüche, bei dem das Terminal in einem Kommunikationsnetzwerk (31) kommuniziert; und in dem sich das Terminal nach Schritt /3/ in dem Kommunikationsnetzwerk (31) basierend auf der Nutzeridentität, user-id, anmeldet.

6. Verfahren zur Verbindung einer Nutzeridentität gemäß irgendeinem der voranstehenden Ansprüche, bei dem die Schritte /1/ bis /3/ bei einer Nutzerbewegung des Terminals umgesetzt werden, die in der Annäherung des genannten Terminals an die Identifizierungseinheit besteht.

7. Mobiles elektronisches Terminal (11), umfassend eine Identität des Terminals (id-term) und geeignet, um einen auf einer Nutzeridentität (user-id) gründenden Dienst zu bieten, wobei das genannte Terminal geeignet ist, um das Vorhandensein einer Identifizierungseinheit (12) in seiner Nähe zu detektieren, wobei die genannte Identifizierungseinheit (12) eine Information bezüglich der Nutzeridentität, user-id, speichert ; wobei das genannte Terminal umfasst:
▪ Mittel (41) zur Anmeldung in einem Kommunikationsnetzwerk (31) basierend auf der Identität des Terminals, id-term;
▪ eine Funkschnittstelleneinheit (61), die geeignet ist, um eine Transaktion (21) ohne Kontakt mit einer Identifizierungseinheit (12) herzustellen und um im Verlauf der genannten Transaktion die Information bezüglich der Nutzeridentität, user-id, zu empfangen, die in der genannten Identifizierungseinheit gespeichert ist;
▪ eine Speichereinheit (62), die geeignet ist, um die genannte Nutzeridentität, user-id, zu speichern, die ausgehend von der genannten Information erhalten wird;
▪ Mittel (32, 52, 53) zur Anmeldung in dem Kommunikationsnetzwerk (31) basierend auf der Nutzeridentität, user-id, nach der Speicherung der genannten Nutzeridentität, user-id, und basierend auf der Identität des Terminals vor der Speicherung der genannten Nutzeridentität, user-id;
▪ eine Speicherverwaltungseinheit (63), die geeignet ist, um die Nutzeridentität, user-id, zu löschen, wenn das Terminal einer spezifischen Aktion unterzogen wird.

8. Terminal gemäß dem voranstehenden Anspruch, bei dem das genannte Terminal geeignet ist, um in einem Kommunikationsnetzwerk (31) zu kommunizieren, wobei das genannte Terminal umfasst:
▪ Mittel zur Lieferung (52) einer Information bezüglich der von der Identifizierungseinheit gelieferten Nutzeridentität an das Kommunikationsnetzwerk (31);
▪ Mittel zum Empfang (53) der genannten Nutzeridentität ausgehend von dem Kommunikationsnetzwerk, wobei eine Verbindung zwischen der Information bezüglich einer Nutzeridentität und die Nutzeridentität in Bezug auf das Kommunikationsnetzwerk (31) verwaltet wird.

9. Terminal (11) gemäß Anspruch 7 und 8, das darüber hinaus geeignet ist, um in einem Kommunikationsnetzwerk (31) zu kommunizieren, in dem die Funkschnittstelleneinheit (61) darüber hinaus geeignet ist, um dem Kommunikationsnetzwerk (31) die Nutzerinformation zu liefern und um ausgehend von dem Kommunikationsnerzwerk die genannte Nutzerinformation zu empfangen (53).

10. Terminal (11) gemäß einem der Ansprüche 7 bis 9, bei dem die Funkschnittstelleneinheit darüber hinaus geeignet ist, um zu bestimmen, ob die Identifizierungseinheit (12) in der Nähe des Terminals angeordnet ist; und
in dem die Speicherverwaltungseinheit (63) darüber hinaus geeignet ist, um die Löschung der Nutzeridentität zu beschließen, wenn die Funkschnittstelleneinheit N konsekutive Male bestimmt, dass die Identifizierungseinheit nicht in der Nähe des Terminals angeordnet ist, wobei N eine beliebige ganze Zahl ist.

11. System zur Verbindung (60) einer Nutzeridentität, umfassend ein Terminal (11) gemäß irgendeinem der Ansprüche 7 bis 10 und eine Identifizierungseinheit (12), in der eine Information bezüglich einer Nutzeridentität gespeichert ist, wobei das genannte System Mittel zur Ausführung des Verfahrens gemäß einem der Ansprüche 1 bis 6 umfasst.

## Claims

1. Method for associating a user identity, user-id, with a mobile electronic terminal (11) comprising an identity of the terminal, id-term, and adapted to offer a service based on said user identity, user-id, said association method including the following steps, at the level of the mobile electronic terminal:
▪ /1/ establishing a transaction between the terminal and an identification entity (12) via a contactless interface (21), said terminal being adapted to detect the presence of said identification entity (12) in its vicinity, said identification entity storing information relating to the user identity, user-id;
▪ /2/ receiving, during said transaction, the information relating to the user identity, user-id, stored in said identification entity and obtaining the user identity, user-id, from said information;
▪ /3/ temporarily storing the user identity, user-id, obtained,
the association method being further **characterised in that** said user identity is erased from the terminal when the terminal is subjected to a specific action and **in that** the terminal communicates in a communication network (31) and **in that**, before step /3/, the terminal registers with the communication network (31) on the basis of the identity of the terminal, id-term, then, after step /3/, on the basis of the identity of the user, user-id.

2. Method for associating a user identity, user-id, according to any of the preceding claims, further including the following steps at the level of the terminal (11):
▪ /4/ determining if the identification entity (12) is situated near to the terminal;
▪ /5/ repeating step /4/ N times, N being an integer; and
▪ /6/ deciding to erase the user identity, user-id, at the level of the terminal if it is determined N consecutive times that the identification entity is not situated near to the terminal.

3. Method for associating a user identity, user-id, according to any of the preceding claims, wherein, after step /3/, the terminal emits an audible or light signal.

4. Method for associating a user identity, user-id, according to any of the preceding claims, wherein the terminal communicates in a communication network (31); and wherein, before step /3/,
▪ reception during said transaction of information relating to a user identity stored in said identification entity;
▪ transmission by the terminal to the communication network (31) of the information relating to the user identity;
▪ reception from the communication network of an identity of the user associated with the information relating to the identity of the user,
▪ temporary storage by the terminal of the user identity received, said user identity being erased from the terminal when said terminal is subjected to a specific action.

5. Method for associating a user identity, user-id, according to any of the preceding claims, wherein the terminal communicates in a communication network (31); and wherein, after step /3/, the terminal registers with the communication network (31) on the basis of the user identity, user-id.

6. Method for associating a user identity according to any of the preceding claims, wherein steps /1/ to /3/ are implemented during a user movement of the terminal consisting in bringing said terminal closer to the identification entity.

7. Mobile electronic terminal (11) comprising an identity of the terminal (id-term) and adapted to offer a service based on a user identity (user-id), said terminal being adapted to detect the presence of an identification entity (12) in its vicinity, said identification entity (12) storing information relating to the user identity, user-id; said terminal including:
▪ means (41) for registering with a communication network (31) on the basis of the identity of the terminal, id-term;
▪ a radio interface unit (61) adapted to establish a contactless transaction (21) with an identification entity (12) and to receive the information relating to the user identity, user-id, stored in said identification entity, during said transaction;
▪ a storage unit (62) adapted to store said user identity, user-id, obtained from said information;
▪ means (32, 52, 53) for registering with the communication network (31) on the basis of the user identity, user-id, after the storage of said user identity, user-id, and on the basis of the identity of the terminal before the storage of said user identity, user-id;
▪ a storage management unit (63) adapted to erase the user identity, user-id, when the terminal is subjected to a specific action.

8. Terminal according to the preceding claim wherein said terminal is adapted to communicate in a communication network (31), said terminal including:
▪ means for supplying (52) to the communication network (31) information relating to the user identity supplied by the identification unit;
▪ means for receiving (53) from the communication network said user identity, an association between the information relating to a user identity and the user identification being managed at the level of the communication network (31).

9. Terminal (11) according to claims 7 and 8, being further adapted to communicate in a communication network (31), wherein the radio interface unit (61) is further adapted to supply (52) to the communication network (31) the user information and to receive (53) from the communication network said user identity.

10. Terminal (11) according to one of claims 7 to 9, wherein the radio interface unit is further adapted to determine if the identification entity (12) is situated near to the terminal; and
wherein the storage management unit (63) is further adapted to decide to erase the user identity when the radio interface unit determines N consecutive times that the identification entity is not situated near to the terminal, N being any integer.

11. System for associating (60) a user identity, including a terminal (11) according to any of claims 7 to 10 and an identification entity (12) in which is stored information relating to a user identity, said system including means for executing the method according to one of claims 1 to 6.
